# EUROPEAN PATENT APPLICATION

(11) **EP 4 737 195 A1**
(43) Date of publication of application: **06.05.2026**
(21) Application number: 24905595.5
(22) Date of filing: 16.08.2024
(51) Int. Cl.: B60L 53/60, B60L 53/63, H02J 3/00

(54) **MULTI-MODE CHARGING AND DISCHARGING CONTROL METHOD AND SYSTEM FOR CHARGING PILE**

(30) Priority: 18.12.2023 CN 202311738190
(71) Applicant: Anhui Yijianeng Digital Technology Co., Ltd., Hefei, Anhui 230000 (CN)
(72) Inventor: DAI, Yong, Hefei, Anhui 230000 (CN); LIN, Wei, Hefei, Anhui 230000 (CN); WEI, Xiaofei, Hefei, Anhui 230000 (CN)
(74) Representative: Novagraaf Technologies
(86) International application number: PCT/CN2024/112773
(87) International publication number: WO 2025/130100

(57) **Abstract**

Provided are a multi-mode charging and discharging control method and system for charging piles, relating to the technical field of charging and discharging control. The method comprises: configuring charging pile charging and discharging modes; obtaining a peak value period, an flat value period, and a valley value period; in the peak value period, starting a peak mode, and generating a charging pile bidirectional discharging strategy; in the flat value period, starting a flat mode, executing charging pile linkage discharging optimization, and generating a linkage discharging strategy to perform charging pile discharging control; and in the valley value period, starting a valley mode, executing charging pile charging optimization, and generating a charging pile charging strategy to perform charging pile charging control. The technical problem of poor scenario adaptability caused by lack of analysis and adjustment of a power grid load in the related art is solved, adaptive adjustment of charging and discharging control is achieved on the basis of a power grid load scenario, and the technical effect of improving the scenario adaptability is achieved.

## Description

The present disclosure claims priority to Chinese patent application No. 2023117381902, entitled "Multi-Mode Charging and Discharging Control Method and System for Charging Piles" filed with the State Intellectual Property Office of P. R. China on December 18, 2023, which is incorporated herein by reference in its entirety.

### Technical Field

The present disclosure relates to the technical field of charging and discharging control, specifically to a multi-mode charging and discharging control method and system for charging piles.

### Background

With the rapid development and application of new energy, electric vehicles have also been widely used. Naturally, the investment and construction of charging piles are increasing, which leads to widespread distribution of charging piles but a lower utilization rate. Traditionally, when charging piles are charged and discharged, the charging piles are usually controlled singly, that is, power grid alternating current charging and energy storage battery charging are switched, which lacks analysis and regulation on the power grid loads, resulting in poor scenario adaptability.

### Summary

The present disclosure provides a multi-mode charging and discharging control method and system for charging piles to solve the technical problem of poor scenario adaptability caused by the lack of analysis and regulation on the power grid loads in the related art.

According to a first aspect of the present disclosure, a multi-mode charging and discharging control method for charging piles is provided. The method includes: configuring charging pile charging and discharging modes, wherein the charging pile charging and discharging modes comprise a peak mode, a flat mode and a valley mode; when a preset update period is met, performing a statistics operation on electricity consumption information of a power grid in a preset region in a preset period to obtain a peak value period, a flat value period and a valley value period; when the power grid is in the peak value period, starting the peak mode, receiving a charging pile discharging requirement in the preset region, executing charging pile bidirectional discharging optimization, and generating a charging pile bidirectional discharging strategy to perform charging pile discharging control; when the power grid is in the flat value period, starting the flat mode, receiving a charging pile discharging requirement in the preset region, executing charging pile linkage discharging optimization, and generating a linkage discharging strategy to perform charging pile discharging control; and when the power grid is in the valley value period, starting the valley mode, receiving a charging pile discharging requirement in the preset region, executing charging pile charging optimization, and generating a charging pile charging strategy to perform charging pile charging control.

According to a second aspect of the present disclosure, a multi-mode charging and discharging control system for charging piles is provided. The system includes: a charging and discharging mode configuring assembly, the charging and discharging mode configuring assembly being configured to configure charging pile charging and discharging modes, wherein the charging pile charging and discharging modes include a peak mode, a flat mode and a valley mode; an electricity consumption information statistics assembly, the electricity consumption information statistics assembly being configured to, when a preset update period is met, perform a statistics operation on electricity consumption information of a power grid in a preset region in a preset period to obtain a peak value period, a flat value period and a valley value period; a bidirectional discharging optimization assembly, the bidirectional discharging optimization assembly being configured to, when the power grid is in the peak value period, start the peak mode, receive a charging pile discharging requirement in the preset region, execute charging pile bidirectional discharging optimization, and generate a charging pile bidirectional discharging strategy to perform charging pile discharging control; a linkage discharging optimization assembly, the linkage discharging optimization assembly being configured to, when the power grid is in the flat value period, start the flat mode, receive a charging pile discharging requirement in the preset region, execute charging pile linkage discharging optimization, and generate a linkage discharging strategy to perform charging pile discharging control; and a charging optimization assembly, the charging optimization assembly being configured to, when the power grid is in the valley value period, start the valley mode, receive a charging pile discharging requirement in the preset region, execute charging pile charging optimization, and generate a charging pile charging strategy to perform charging pile charging control.

According to one or more technical solutions adopted in the present disclosure, the following beneficial effects can be achieved: by configuring different charging pile charging and discharging modes and combining a power grid to set different charging and discharging strategies for electricity consumption states at different times. During an electricity consumption peak period, a charging pile performs bidirectional discharging to a user side and a power distribution network direction to achieve the technical effect of reducing the load pressure of the power distribution network; during a stable electricity consumption period, when the initial electricity storage capacity of the charging pile is not able to meet the requirement of the user side, the power grid is activated for auxiliary discharging to meet the requirement of a charging user while reducing the charging pressure of the charging pile; and during an electricity consumption valley period, the charging user of the charging pile is charged through the power grid, and the charging pile that needs to be charged is also charged through the power grid to ensure that the charging pile is fully charged, thereby avoiding insufficient stored electricity when switching to the peak mode subsequently, and achieving the technical effect of charging and discharging balance adjustment in different modes. Therefore, adaptive adjustment of charging and discharging control is achieved on the basis of a power grid load scenario, and the technical effect of improving the scenario adaptability is achieved.

### Brief Description of the Drawings

To describe the technical schemes in the present disclosure or the related art more clearly, the following briefly introduces the accompanying drawings for describing the embodiments or the related art. The accompanying drawings constituting a part of the present disclosure are used to provide a further understanding for the present disclosure. Exemplary embodiments of the present disclosure and descriptions thereof are used to explain the present disclosure, but do not constitute any improper limitation on the present disclosure. For those of ordinary skill in the art, other accompanying drawings can also be obtained according to the provided accompanying drawings without any creative work.
Fig. 1 is a schematic flowchart of a multi-mode charging and discharging control method for charging piles provided in an embodiment of the present disclosure; and
Fig. 2 is a schematic structural diagram of a multi-mode charging and discharging control system for charging piles provided in an embodiment of the present disclosure.

Description of reference numerals: charging and discharging mode configuring assembly 11, electricity consumption information statistics assembly 12, bidirectional discharging optimization assembly 13, linkage discharging optimization assembly 14, and charging optimization assembly 15.

### Detailed Description of the Embodiments

To make the objectives, technical schemes and advantages of the present disclosure more apparent, exemplary embodiments of the present disclosure are described in detail below with reference to the accompanying drawings. It is apparent that the described embodiments are only a part of the embodiments of the present disclosure, rather than all of the embodiments of the present disclosure. It should be understood that the present disclosure is not limited by the exemplary embodiments described herein.

The terms used in the specification are used to describe the embodiments, rather than limit the present disclosure. As used in the specification, the singular terms "a", "one" and "the" are intended to also include the plural form unless otherwise specified in the context. When used in the specification, the terms "including" and/or "containing" specify the presence of steps, operations, elements and/or assemblies, but do not exclude the presence or addition of one or more other steps, operations, elements, assemblies and/or groups thereof.

Unless otherwise defined, all terms (including technical and scientific terms) used in the specification shall have the same meanings as those commonly understood by those skilled in the art of the present disclosure. Terms, such as the terms defined in commonly used dictionaries, should not be interpreted in an idealized or overly formal sense unless explicitly defined here. Throughout the entire specification, the same reference numerals indicate the same elements.

It should be noted that the user information (including but not limited to user equipment information, user personal information, etc.) and data (including but not limited to data for display, data for analysis, etc.) involved in the present disclosure are information and data authorized by users or fully authorized by all parties.

### Embodiment 1

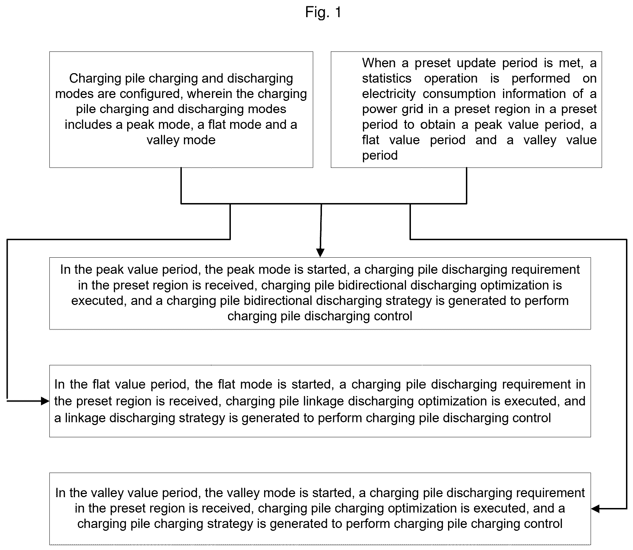

Fig. 1 is a flowchart of a multi-mode charging and discharging control method for charging piles provided in an embodiment of the present disclosure. The method includes:
Charging pile charging and discharging modes are configured, wherein the charging pile charging and discharging modes include a peak mode, a flat mode and a valley mode.

The charging pile charging and discharging modes are configured, and the charging pile charging and discharging modes include a peak mode, a flat mode and a valley mode, wherein the charging pile charging and discharging modes are related to an electricity consumption load state of a power distribution network in a preset region. The peak mode refers to a state in which there is a higher requirement for electricity and a larger load on the power distribution network. The flat mode refers to a state in which the requirement for electricity is relatively flat. The valley mode refers to a state in which the requirement for electricity is relatively small. Subsequently, the charging and discharging control of charging piles is performed on the basis of the charging pile charging and discharging modes.

The method includes: when a preset update period is met, a statistics operation is performed on electricity consumption information of a power grid in a preset region in a preset period to obtain a peak value period, a flat value period and a valley value period.

The preset update period refers to a period for performing a statistics operation on electricity consumption information, and is set by professional technical personnel in the field based on actual situations, for example, once a week. The preset region refers to a region where the charging pile to be subjected to charging and discharging control is located. The preset period refers to a time length for counting electricity consumption information. For example, when the preset update period is met, a statistics operation is performed on the electricity consumption information within one day. For example, a power system in the preset region may be connected to invoke the electricity consumption information of the power grid in the preset region in the preset period, and the preset period is segmented according to the electricity consumption. The time period with the maximum electricity consumption is extracted from the electricity consumption information of the power grid in the preset region as the peak value period, the time period with the minimum electricity consumption is extracted as the valley value period, and the remaining time periods with relatively stable electricity consumption are extracted as the flat value period.

In a preferred embodiment, when the preset update period is met, performing the statistics operation on the electricity consumption information of the power grid in the preset region in the preset period to obtain the peak value period, the flat value period and the valley value period includes: the electricity consumption information of the power grid in the preset region includes an electricity consumption time point table in the preset region, and constructing an electricity consumption fluctuation time sequence curve; configuring a peak value electricity consumption range, a flat value electricity consumption range and a valley value electricity consumption range; and performing period segmentation on the electricity consumption fluctuation time sequence curve according to the peak value electricity consumption range, the flat value electricity consumption range and the valley value electricity consumption range to generate the peak value period, the flat value period and the valley value period.

In a preferred embodiment, the electricity consumption information of the power grid in the preset region includes an electricity consumption time point table in the preset region, the constructing an electricity consumption fluctuation time sequence curve includes: extracting a plurality of recorded electricity consumptions at a first time point in the electricity consumption time point table in the preset region; sorting the plurality of recorded electricity consumptions from small to large to generate a recorded electricity consumption sorting result; extracting a first recorded electricity consumption with a quarter number and a second recorded electricity consumption with a three-quarter number from the recorded electricity consumption sorting result; calculating a deviation between the second recorded electricity consumption and the first recorded electricity consumption to generate an electricity consumption interquartile range; constructing a centralized box line diagram according to the electricity consumption interquartile range, the first recorded electricity consumption and the second recorded electricity consumption, and distributing the plurality of recorded electricity consumptions to obtain a maximum electricity consumption of a centralized box, which is set as an electricity consumption at the first time point; and determining respective electricity consumptions at multiple unit time points by the above method for determining the electricity consumption at the first time point to construct the electricity consumption fluctuation time sequence curve.

For example, the electricity consumption information of the power grid in the preset region includes a electricity consumption time point table in the preset region, and the electricity consumption fluctuation time sequence curve is constructed, wherein the electricity consumption time point table in the preset region is a table obtained by organization of electricity consumptions at continuous time points in the preset region. For example, electricity consumptions at 9 a.m., 10 a.m., 11 a.m. and other time points specifically may be invoked by connecting the power system. The electricity consumption is taken as a longitudinal axis, the time point is taken as a horizontal axis, and a curve is drawn for electricity consumptions at continuous time points in the electricity consumption time point table in the preset region to obtain the electricity consumption fluctuation time sequence curve. The detail processes are as follows: a plurality of recorded electricity consumptions at a first time point in the electricity consumption time point table in the preset region are extracted, wherein the first time point is any time point in 24-hour unit time points within one day. Specifically, the interval between time points may be determined based on actual situations, for example, every 30 min or 1 h, such as 9 o'clock or 10 o'clock, to acquire recorded electricity consumptions at 9 o'clock within each day in one week, thereby obtaining the plurality of recorded electricity consumptions. The plurality of recorded electricity consumptions are sorted from small to large to generate a recorded electricity consumption sorting result. The first recorded electricity consumption with a quarter number and the second recorded electricity consumption with a three-quarter number are extracted from the recorded electricity consumption sorting result. If the quarter number or three-quarter number is not an integer, the number may be rounded up or down. For example, if there are a total of 10 recorded electricity consumptions in the recorded electricity consumption sorting result, 10 is multiplied by quarter and then rounded up to obtain 3 as the quarter number, and the third recorded electricity consumption in the recorded electricity consumption sorting result is extracted as the first recorded electricity consumption. Similarly, the second recorded electricity consumption with the three-quarter number is obtained.

As at least one alternative embodiment, the first recorded electricity consumption may be subtracted from the second recorded electricity consumption to obtain the electricity consumption interquartile range. According to the electricity consumption interquartile range, the first recorded electricity consumption and the second recorded electricity consumption, a centralized box line diagram is constructed. Popularly speaking, the centralized box is a centralized box constructed by an electricity consumption interval consisting of the first recorded electricity consumption and the second recorded electricity consumption. The calculation result obtained by subtracting 1.5 times the electricity consumption interquartile range from the first recorded electricity consumption is taken as a lower box line, the calculation result obtained by adding 1.5 times the electricity consumption interquartile range to the second recorded electricity consumption is taken as an upper box line, the upper box line and the lower box line form a centralized box line, and the centralized box and the centralized box line form a centralized box line diagram. Optionally, a plurality of recorded electricity consumptions may be drawn in the centralized box line diagram. When a plurality of recorded electricity consumptions are below the lower box line or above the upper box line, the recorded electricity consumptions are considered as discrete data. When a plurality of recorded electricity consumptions are between the lower box line and the centralized box or between the upper box line and the centralized box, the recorded electricity consumptions belong to box line centralized data. When the plurality of recorded electricity consumptions are in the centralized box, the recorded electricity consumptions belong to box centralized data, and a maximum recorded electricity consumption is selected from the box centralized data, that is, the maximum electricity consumption of the centralized box is set as the electricity consumption at the first time point.

Multiple unit time points may be determined within 24 hours. The first time point may be any one time point of the multiple unit time points. Then, the electricity consumption at the first time point may be added to electricity consumptions at unit time points within the 24-hour, and electricity consumptions at other time points included in the multiple unit time points are obtained by the same method, thereby obtaining electricity consumptions at unit time points within the 24-hour. During subsequent charging and discharging control of charging piles, the statistical analysis of electricity consumptions may be performed according to the electricity consumptions at unit time points with the 24-hour. The unit time points with the 24-hour is taken as a horizontal axis, the electricity consumption is taken as a longitudinal axis, and a curve of electricity consumptions at unit time points within the 24-hour is drawn to obtain the electricity consumption fluctuation time sequence curve. Therefore, by performing data centralized analysis of a plurality of recorded electricity consumptions at each time point, electricity consumption data under abnormal situations is eliminated to ensure the stability of the obtained electricity consumption fluctuation time sequence curve.

As at least one alternative embodiment, the peak value electricity consumption range, the flat value electricity consumption range and the valley value electricity consumption range are configured, wherein the peak value electricity consumption range, the flat value electricity consumption range and the valley value electricity consumption range are set by professional technical personnel in the field based on actual situations. Period segmentation is performed on the electricity consumption fluctuation time sequence curve according to the peak value electricity consumption range, the flat value electricity consumption range and the valley value electricity consumption range to generate a peak value period, a flat value period and a valley value period. In short, the peak value period is a time period within the peak value electricity consumption range in the electricity consumption fluctuation time sequence curve, the flat value period is a time period within the flat value electricity consumption range in the electricity consumption fluctuation time sequence curve, and the valley value period is a time period within the valley value electricity consumption range in the electricity consumption fluctuation time sequence curve. Therefore, period segmentation of different electricity consumptions is achieved, which is convenient for subsequent charging and discharging optimization control in different charging pile charging and discharging modes, so as to improve the adaptability of charging and discharging control of charging piles to the load of the power grid.

The method further includes: in the peak value period, starting the peak mode, receiving the charging pile discharging requirement in the preset region, executing charging pile bidirectional discharging optimization, and generating a charging pile bidirectional discharging strategy to perform charging pile discharging control.

If the current time point belongs to the peak value period, the peak mode is started, charging pile discharging requirement in the preset region is received, and charging pile bidirectional discharging optimization is executed, wherein the charging pile bidirectional discharging optimization refers to discharging optimization in a power distribution network direction and a user side direction, and the charging pile bidirectional discharging strategy is generated to perform charging pile discharging control. Specific implementation processes are described in detail below.

In a preferred embodiment, in the peak value period, the starting the peak mode, receiving a charging pile discharging requirement in the preset region, executing charging pile bidirectional discharging optimization, and generating a charging pile bidirectional discharging strategy to perform charging pile discharging control includes: the charging pile discharging requirement in the preset region includes a charging pile required discharging capacity and a charging pile initial electricity storage capacity; obtaining a charging pile redundant electricity storage capacity according to the charging pile required discharging capacity and the charging pile initial electricity storage capacity; setting at most two-thirds of the charging pile redundant electricity storage capacity as a power distribution network direction discharging capacity; and executing the charging pile bidirectional discharging optimization according to the power distribution network direction discharging capacity, and generating the charging pile bidirectional discharging strategy to perform charging pile discharging control.

In a preferred embodiment, the executing the charging pile bidirectional discharging optimization according to the power distribution network direction discharging capacity, and generating the charging pile bidirectional discharging strategy to perform charging pile discharging control includes: the charging pile initial electricity storage capacity includes an initial electricity storage capacity of a charging pile with a first number, an initial electricity storage capacity of a charging pile with a second number, ..., and an initial electricity storage capacity of a charging pile with the Nth number; extracting charging piles having the initial electricity storage capacity greater than or equal to a preset electricity storage capacity from the charging pile with the first number, the charging pile with the second number, ..., and the charging pile with the Nth number to obtain power distribution network direction discharging charging pile numbers; equally dividing the power distribution network direction discharging capacity to charging piles with the power distribution network direction discharging charging pile numbers to generate a power distribution network direction discharging strategy; configuring a user side direction discharging strategy, wherein the user side direction discharging strategy implements real-time discharging of a charging pile energy storage battery based on user requirements; and according to the power distribution network direction discharging strategy and the user side direction discharging strategy, constructing the charging pile bidirectional discharging strategy to perform charging pile discharging control.

The charging pile discharging requirement in the preset region includes a charging pile required discharging capacity and a charging pile initial electricity storage capacity, wherein the charging pile required discharging capacity refers to a discharging requirement within an interval period between the peak value at the current time and the next valley value. For example, every day, when 9 o'clock, 10 o'clock, 18 o'clock and 19 o'clock are peak value periods and 12 o'clock, 22 o'clock, 23 o'clock, 0 o'clock and 1 o'clock are valley value periods, if the current peak value is at 10 o'clock, the next valley value will be at 12 o'clock, and the discharging requirement from 10 o'clock to 12 o'clock is the charging pile required discharging capacity, namely the electricity needing to be provided by a charging pile for an electric vehicle and other devices to be charged, which needs to be specifically determined based on actual situations. The charging pile initial electricity storage capacity refers to a remaining electricity of an energy storage battery inside the charging pile at the current time. The charging pile required discharging capacity is subtracted from the charging pile initial electricity storage capacity to obtain a charging pile redundant electricity storage capacity, namely the remaining electricity that is able to be transmitted to the power distribution network after the charging pile required discharging capacity is provided by the charging pile, and at most two-thirds of the charging pile redundant electricity storage capacity is set as a power distribution network direction discharging capacity. That is to say, it is necessary to reserve a certain electricity inside the charging pile to prevent emergency situations. Finally, according to the power distribution network direction discharging capacity, charging pile bidirectional discharging optimization is executed, and a charging pile bidirectional discharging strategy is generated to perform charging pile discharging control, thereby reducing the electricity consumption load pressure of the power distribution network during the peak value period.

For example, according to the power distribution network direction discharging capacity, the process of executing charging pile bidirectional discharging optimization and generating a charging pile bidirectional discharging strategy to perform charging pile discharging control is as follows: the charging pile initial electricity storage capacity includes a initial electricity storage capacity of a charging pile with a first number, a initial electricity storage capacity of a charging pile with a second number, ..., and an initial electricity storage capacity of a charging pile with the Nth number. That is, charging piles in the preset region are numbered with Arabic numerals, each charging pile has a unique number, and the remaining electricity of an energy storage battery inside each charging pile at the current time is acquired. Charging piles having the initial electricity storage capacity greater than or equal to a preset electricity storage capacity are extracted from the charging pile with the first number, the charging pile with the second number, ..., and the charging pile with the Nth number to obtain power distribution network direction discharging charging pile numbers, wherein the preset electricity storage capacity is set by professional technical personnel in this field based on actual situations, and is not limited herein. Exemplarily, the charging pile required discharging capacity may be increased by 20% to serve as the preset electricity storage capacity. Thus, the power distribution network direction discharging capacity is equally divided to charging pile with the power distribution network direction discharging charging pile numbers to generate the power distribution network direction discharging strategy. That is, the quantity of the power distribution network direction discharging charging pile numbers is divided by the power distribution network direction discharging capacity to serve as the electricity transmitted to the power distribution network by the charging pile corresponding to each power distribution network direction discharging charging pile number, thereby generating the power distribution network direction discharging strategy.

As at least one alternative embodiment, the user side direction discharging strategy may be configured, wherein the user side direction discharging strategy implements real-time discharging of a charging pile energy storage battery based on user requirements. That is, the electricity required by the user serves as a discharging capacity provided by the charging pile to the user side. Finally, the power distribution network direction discharging strategy and the user side direction discharging strategy serve as the charging pile bidirectional discharging strategy to perform charging pile discharging control. That is, the charging pile is controlled for discharging to both directions of the power distribution network and the user side, thereby reducing the electricity consumption load pressure of the power distribution network.

The method includes: in the flat value period, starting the flat mode, receiving a charging pile discharging requirement in the preset region, executing charging pile linkage discharging optimization, and generating a linkage discharging strategy to perform charging pile discharging control.

In a preferred embodiment, in the flat value period, the starting the flat mode, receiving a charging pile discharging requirement in the preset region, executing charging pile linkage discharging optimization, and generating a linkage discharging strategy to perform charging pile discharging control includes: the charging pile discharging requirement in the preset region includes a charging pile required discharging capacity and a charging pile initial electricity storage capacity; the charging pile required discharging capacity includes a first charging pile required discharging capacity, and the charging pile initial electricity storage capacity includes a first charging pile initial electricity storage capacity; extracting a first type of charging piles having the first charging pile required discharging capacity greater than the first charging pile initial electricity storage capacity; extracting a second type of charging piles having the first charging pile required discharging capacity less than the first charging pile initial electricity storage capacity; and activating a power grid for auxiliary discharging for the first type of charging piles, and executing energy storage battery discharging for the second type of charging piles, as to generate the linkage discharging strategy to perform charging pile discharging control.

Specifically, in the flat value period, the flat mode is started, charging pile discharging requirement in the preset region is received, charging pile linkage discharging optimization is executed, and the linkage discharging strategy is generated to perform charging pile discharging control. Specific processes are as follows: the charging pile discharging requirement in the preset region includes a charging pile required discharging capacity and a charging pile initial electricity storage capacity, the charging pile required discharging capacity is a electricity needing to be provided by any one of charging piles in the preset region to the user side, the charging pile initial electricity storage capacity includes a charging pile initial electricity storage capacity, and the charging pile initial electricity storage capacity is an electricity currently stored in a charging pile corresponding to the charging pile required discharging capacity. Specific details need to be determined based on actual situations.

Charging piles having the charging pile required discharging capacity greater than the charging pile initial electricity storage capacity are extracted as the first type of charging piles, the charging pile initial electricity storage capacity is not able to meet the discharging requirement, and the power grid needs to be activated for auxiliary discharging. Charging piles having the charging pile required discharging capacity less than the charging pile initial electricity storage capacity are extracted as the second type of charging piles, and the charging pile initial electricity storage capacity is able to meet the discharging requirement. For the first type of charging piles, the power grid is activated for auxiliary discharging, that is, the first type of charging piles are preferentially used for discharging to the user side. When the electricity of the energy storage battery inside the type of charging pile is insufficient, the power grid is used for discharging to the user side so as to meet the requirement of the user side. Furthermore, energy storage battery discharging is executed for the second type of charging piles, that is, the second type of charging piles are used for discharging to the user side, thereby generating a discharging strategy for the first type of charging piles and a discharging strategy for the second type of charging piles as a linkage discharging strategy to perform charging pile discharging control. Thus, in the flat value period, when the initial electricity storage capacity of the charging pile is not able to meet the requirement of the user side, the power grid is activated for auxiliary discharging to meet the requirements of customers so as to reduce the charging pressure of the charging pile.

The method includes: in the valley value period, starting the valley mode, receiving a charging pile discharging requirement in the preset region, executing charging pile charging optimization, and generating a charging pile charging strategy to perform charging pile charging control.

In a preferred embodiment, in the valley value period, the starting the valley mode, receiving a charging pile discharging requirement in the preset region, executing charging pile charging optimization, and generating a charging pile charging strategy to perform charging pile charging control includes: according to the charging pile discharging requirement in the preset region, configuring a power grid alternating current discharging strategy, wherein the power grid alternating current discharging strategy invokes the power grid based on user requirements for alternating current charging for users through charging piles; according to a charging pile initial electricity storage capacity in the charging pile discharging requirement in the preset region, obtaining an initial electricity storage capacity ratio, wherein the initial electricity storage capacity ratio represents a ratio of a remaining electricity of any charging pile to an electric energy capacity thereof; extracting a third type of charging piles having the initial electricity storage capacity ratio less than or equal to an electricity storage capacity ratio threshold to configure a power grid charging strategy; and according to the power grid alternating current discharging strategy and the power grid charging strategy, constructing the charging pile charging strategy to perform charging pile charging control.

In the valley value period, the process of starting the valley mode, receiving a charging pile discharging requirement in the preset region, executing charging pile charging optimization, and generating a charging pile charging strategy to perform charging pile charging control is as follows: according to the charging pile discharging requirement in the preset region, the power grid alternating current discharging strategy is configured, wherein the power grid alternating current discharging strategy invokes the power grid based on user requirements for alternating current charging for users through charging piles. That is to say, the power grid transmits electric energy to charging piles, and then, the charging piles perform alternating current charging for users. In brief, the power grid performs charging for users. According to the charging pile initial electricity storage capacity in the charging pile discharging requirement in the preset region, the initial electricity storage capacity ratio is obtained, wherein the initial electricity storage capacity ratio represents a ratio of a remaining electricity of any charging pile to an electric energy capacity thereof, and the electric energy capacity is the total amount of electric energy that is able to be stored when the charging pile energy storage battery is fully charged. The electricity storage capacity ratio threshold is determined by professional technical personnel in this field based on actual situations. In brief, when a charging pile is fully charged, the initial electricity storage capacity ratio corresponding to the charging pile should be infinitely close to 1. Thus, a smaller initial electricity storage capacity ratio indicates that the charging pile has less remaining electricity and more needs to be charged. The electricity storage capacity ratio threshold is a threshold set by professional technical personnel in the field when charging is required. Thus, the third type of charging piles having the initial electricity storage capacity ratio less than or equal to the electricity storage capacity ratio threshold are extracted to configure a power grid charging strategy. That is, the third type of charging piles are charged through the power grid, and the charging capacity is a deviation between the remaining electricity of the charging pile and the electric energy capacity thereof, thereby generating the power grid charging strategy. Finally, the power grid alternating current discharging strategy and the power grid charging strategy from the charging pile charging strategy to perform charging pile charging control. Therefore, during an electricity consumption valley period, charging users of charging piles are charged through the power grid, and the charging piles needing to be charged are charged through the power grid to ensure the sufficient electricity of the charging piles, thereby avoiding insufficient stored electricity when switching to the peak mode subsequently, and achieving the charging and discharging balance adjustment in different modes.

In a preferred embodiment, the method further includes: when a first charging pile is connected by a charging user, obtaining a model of a battery to be charged and an electricity to be charged; when an initial electricity storage capacity of the first charging pile is less than the electricity to be charged, adding a fourth type of charging piles; when the initial electricity storage capacity of the first charging pile is greater than the electricity to be charged, adding a fifth type of charging piles; and invoking the fifth type of charging piles for auxiliary charging to the fourth type of charging piles.

The invoking the fifth type of charging piles for auxiliary charging to the fourth type of charging piles includes: obtaining a lacking charging capacity of any of the fourth type of charging piles, and matching auxiliary charging piles to be scheduled in the fifth type of charging piles, wherein a redundant electricity storage capacity of the auxiliary charging pile to be scheduled is greater than or equal to the lacking charging capacity; constructing a plurality of scheduling lines corresponding to the auxiliary charging piles to be scheduled, and activating a line loss prediction channel to execute electricity loss analysis to generate electricity loss feature values, wherein the line loss prediction channel has a graph neural network topology structure; and according to the preset number of times, updating the auxiliary charging piles to be scheduled to obtain updated auxiliary charging piles to be scheduled, determining a plurality of scheduling lines corresponding to the updated auxiliary charging piles to be scheduled and electricity loss feature values, and extracting a charging pile scheduling strategy with a minimum electricity loss feature value for auxiliary charging to the fourth type of charging piles.

Specifically, in the peak value period, the peak mode is started, and the charging pile bidirectional discharging strategy is generated to perform charging pile discharging control. That is to say, discharging control is performed on the user side direction to charge electrical devices of users, such as electric vehicles, and discharging control is performed on the power distribution network direction. The first charging pile generally refers to any of the charging piles in the preset region. When the first charging pile is connected by a charging user, the model of the battery to be charged and the electricity to be charged of the charging user are read. The model of the battery to be charged and the electricity to be charged may be uploaded by the user through a client. When the initial electricity storage capacity of the first charging pile is less than the electricity to be charged, the fourth type of charging piles are added. In brief, the fourth type of charging piles refer to charging piles whose remaining electricity is not able to meet the charging requirements of charging users. When the initial electricity storage capacity of the first charging pile is greater than the electricity to be charged, the fifth type of charging piles are added. The fifth type of charging piles are charging piles whose remaining electricity is able to meet the charging requirements of charging users and having surplus electricity.

The specific process of invoking the fifth type of charging piles for auxiliary charging to the fourth type of charging piles is as follows: the lacking charging capacity of any of the fourth type of charging piles is obtained. The lacking charging capacity is a difference between the electricity to be charged and the charging pile initial electricity storage capacity. The auxiliary charging piles to be scheduled are matched from the fifth type of charging piles, wherein the redundant electricity storage capacity of the auxiliary charging piles to be scheduled is greater than or equal to the lacking charging capacity. The redundant electricity storage capacity refers to a difference between the charging pile initial electricity storage capacity of the fifth type of charging piles and the electricity to be charged. In brief, the redundant electricity storage capacity is the remaining electricity after the charging pile meets the charging requirement of the own charging user. In the fifth type of charging piles, charging piles having the redundant electricity storage capacity greater than or equal to the lacking charging capacity are obtained as the auxiliary charging piles to be scheduled.

It should be noted that in the embodiments of the present disclosure, circuits of all charging piles are interconnected, so that the electric energy can be scheduled. Based on this, a plurality of scheduling line topologies corresponding to the auxiliary charging piles to be scheduled may be constructed. The scheduling line topology refers to an electric energy scheduling line between the auxiliary charging pile to be scheduled and the fourth type of charging pile. Popularly speaking, the circuits of all charging piles are interconnected, so that one or more charging piles may serve as intermediate nodes for scheduling the electric energy, and a plurality of scheduling line topologies can be obtained. A line loss prediction channel is activated to execute electricity loss analysis to generate electricity loss feature values, wherein the line loss prediction channel has a graph neural network topology structure. That is to say, in an electric energy scheduling process, the electric energy is transmitted through charging piles, which will inevitably cause a certain amount of electric energy loss. The line loss prediction channel is a functional model for predicting electric energy loss, the network structure of the line loss prediction channel is a graph neural network topology structure, and the graph neural network topology structure is an existing graph neural network model for processing graph data. Specifically, the electricity loss data corresponding to different scheduling line topology data is collected and obtained based on the related art and used as training data for the graph neural network model, the scheduling line topology data is input into the graph neural network model, and output supervision adjustment is performed based on the corresponding electricity loss data to obtain the line loss prediction channel trained to convergence. A plurality of scheduling line topologies are input into the line loss prediction channel to obtain electricity loss feature values.

Finally, according to the preset number of times, the auxiliary charging piles to be scheduled are updated to obtain updated auxiliary charging piles to be scheduled, a plurality of scheduling lines corresponding to the updated auxiliary charging piles to be scheduled and electricity loss feature values are determined, and a charging pile scheduling strategy with a minimum electricity loss feature value is extracted for auxiliary charging to the fourth type of charging piles. That is to say, the charging piles are interconnected, any one or more auxiliary charging piles to be scheduled serve as nodes for discharging to the power distribution network or auxiliary charging to the fourth type of charging piles to schedule electric energy, so as to adjust the electric energy scheduling line multiple times. Different scheduling line topologies are obtained, and corresponding electricity loss feature values are obtained through the line loss prediction channel until the preset number of times is reached. The preset number of times is set by professional technical personnel in this field, such as 50 times. Finally, the scheduling line topology with the minimum electricity loss feature value is obtained as a charging pile scheduling strategy for auxiliary charging to the fourth type of charging piles, thereby reducing the electric energy loss.

Based on the above analysis, it can be concluded that one or more technical solutions provided in the present disclosure can achieve the following beneficial effects: by configuring different charging pile charging and discharging modes and combining a power grid to set different charging and discharging strategies for electricity consumption states at different times, during an electricity consumption peak period, a charging pile performs bidirectional discharging to a user side and a power distribution network direction to achieve the technical effect of reducing the load pressure of the power distribution network; during a stable electricity consumption period, when the initial electricity storage capacity of the charging pile is not able to meet the requirement of the user side, the power grid is activated for auxiliary discharging to meet the requirement of a charging user while reducing the charging pressure of the charging pile; and during an electricity consumption valley period, the charging user of the charging pile is charged through the power grid, and the charging pile that needs to be charged is also charged through the power grid to ensure that the charging pile is fully charged, thereby avoiding insufficient stored electricity when switching to the peak mode subsequently, and achieving the technical effect of charging and discharging balance adjustment in different modes. Therefore, adaptive adjustment of charging and discharging control is achieved on the basis of a power grid load scenario, and the technical effect of improving the scenario adaptability is achieved.

### Embodiment 2

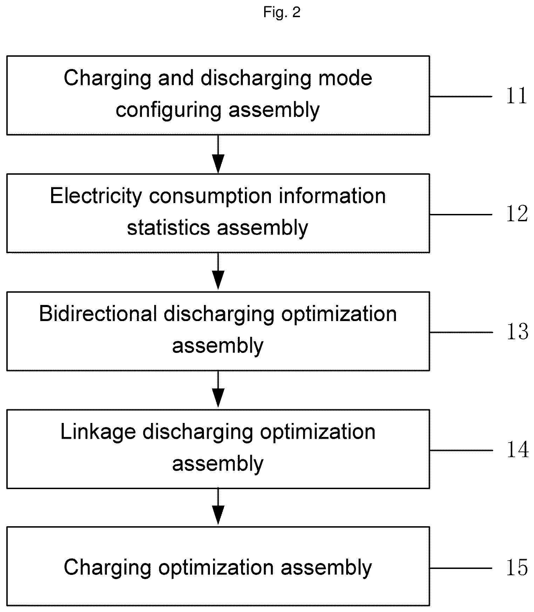

Based on the same inventive concept as the multi-mode charging and discharging control method for charging piles in the above embodiment, as shown in Fig. 2, the present disclosure further provides a multi-mode charging and discharging control system for charging piles. The system includes:
a charging and discharging mode configuring assembly 11, the charging and discharging mode configuring assembly 11 being configured to configure charging pile charging and discharging modes, wherein the charging pile charging and discharging modes include a peak mode, a flat mode and a valley mode;
an electricity consumption information statistics assembly 12, the electricity consumption information statistics assembly 12 being configured to, when a preset update period is met, perform a statistics operation on electricity consumption information of a power grid in a preset region in a preset period to obtain a peak value period, a flat value period and a valley value period;
a bidirectional discharging optimization assembly 13, the bidirectional discharging optimization assembly 13 being configured to, when the power grid is in the peak value period, start the peak mode, receive a charging pile discharging requirement in the preset region, execute charging pile bidirectional discharging optimization, and generate a charging pile bidirectional discharging strategy to perform charging pile discharging control;
a linkage discharging optimization assembly 14, the linkage discharging optimization assembly 14 being configured to, when the power grid is in the flat value period, start the flat mode, receive a charging pile discharging requirement in the preset region, execute charging pile linkage discharging optimization, and generate a linkage discharging strategy to perform charging pile discharging control; and
a charging optimization assembly 15, the charging optimization assembly 15 being configured to, when the power grid is in the valley value period, start the valley mode, receive a charging pile discharging requirement in the preset region, execute charging pile charging optimization, and generate a charging pile charging strategy to perform charging pile charging control.

As at least one alternative embodiment, the electricity consumption information statistics assembly 12 is further configured to: construct an electricity consumption fluctuation time sequence curve, wherein the electricity consumption information of the power grid in the preset region comprises an electricity consumption time point table in the preset region; configure a peak value electricity consumption threshold, a flat value electricity consumption threshold and a valley value electricity consumption threshold; and perform period segmentation on the electricity consumption fluctuation time sequence curve according to the peak value electricity consumption threshold, the flat value electricity consumption threshold and the valley value electricity consumption threshold to generate the peak value period, the flat value period and the valley value period.

As at least one alternative embodiment, the electricity consumption information statistics assembly 12 is further configured to: extract a plurality of recorded electricity consumptions at a first time point in the electricity consumption time point table in the preset region; sort the plurality of recorded electricity consumptions from small to large to generate a recorded electricity consumption sorting result; extract a first recorded electricity consumption with a quarter number and a second recorded electricity consumption with a three-quarter number from the recorded electricity consumption sorting result; calculate a deviation between the second recorded electricity consumption and the first recorded electricity consumption to generate an electricity consumption interquartile range; construct a centralized box line diagram according to the electricity consumption interquartile range, the first recorded electricity consumption and the second recorded electricity consumption, and distribute the plurality of recorded electricity consumptions to obtain a maximum electricity consumption of a centralized box, which is set as an electricity consumption at the first time point; and determine respective electricity consumptions at multiple unit time points by the above method for determining the electricity consumption at the first time point to construct the electricity consumption fluctuation time sequence curve.

As at least one alternative embodiment, the bidirectional discharging optimization assembly 13 is further configured to: the charging pile discharging requirement in the preset region includes a charging pile required discharging capacity and a charging pile initial electricity storage capacity; obtain a charging pile redundant electricity storage capacity according to the charging pile required discharging capacity and the charging pile initial electricity storage capacity; set at most two-thirds of the charging pile redundant electricity storage capacity as a power distribution network direction discharging capacity; and according to the power distribution network direction discharging capacity, execute the charging pile bidirectional discharging optimization, and generate the charging pile bidirectional discharging strategy to perform charging pile discharging control.

As at least one alternative embodiment, the bidirectional discharging optimization assembly 13 is further configured to: the charging pile initial electricity storage capacity includes an initial electricity storage capacity of a charging pile with a first number, an initial electricity storage capacity of a charging pile with a second number, ..., and an initial electricity storage capacity of a charging pile with the Nth number; extract charging piles having the initial electricity storage capacity greater than or equal to a preset electricity storage capacity from the charging pile with the first number, the charging pile with the second number, ..., and the charging pile with the Nth number to obtain power distribution network direction discharging charging pile numbers; equally divide the power distribution network direction discharging capacity to charging piles with the power distribution network direction discharging charging pile numbers to generate a power distribution network direction discharging strategy; configure a user side direction discharging strategy, wherein the user side direction discharging strategy implements real-time discharging of a charging pile energy storage battery based on user requirements; and according to the power distribution network direction discharging strategy and the user side direction discharging strategy, construct the charging pile bidirectional discharging strategy to perform charging pile discharging control.

As at least one alternative embodiment, the linkage discharging optimization assembly 14 is further configured to: the charging pile discharging requirement in the preset region includes a charging pile required discharging capacity and a charging pile initial electricity storage capacity; extract a first type of charging piles having the charging pile required discharging capacity greater than the charging pile initial electricity storage capacity; extract a second type of charging piles having the charging pile required discharging capacity less than the charging pile initial electricity storage capacity; and activate a power grid for auxiliary discharging for the first type of charging piles, and execute energy storage battery discharging for the second type of charging piles, as to generate the linkage discharging strategy to perform charging pile discharging control.

As at least one alternative embodiment, the charging optimization assembly 15 is further configured to: according to the charging pile discharging requirement in the preset region, configure a power grid alternating current discharging strategy, wherein the power grid alternating current discharging strategy invokes the power grid based on user requirements for alternating current charging for users through charging piles; according to a charging pile initial electricity storage capacity in the charging pile discharging requirement in the preset region, obtain an initial electricity storage capacity ratio, wherein the initial electricity storage capacity ratio represents a ratio of a remaining electricity of any charging pile to an electric energy capacity thereof; extract a third type of charging piles having the initial electricity storage capacity ratio less than or equal to an electricity storage capacity ratio threshold to configure a power grid charging strategy; and according to the power grid alternating current discharging strategy and the power grid charging strategy, construct the charging pile charging strategy to perform charging pile charging control.

As at least one alternative embodiment, the system further includes an auxiliary charging assembly, and the auxiliary charging assembly is configured to: when a first charging pile is connected by a charging user, obtain a model of a battery to be charged and an electricity to be charged; when an initial electricity storage capacity of the first charging pile is less than the electricity to be charged, add a fourth type of charging piles; when the initial electricity storage capacity of the first charging pile is greater than the electricity to be charged, add a fifth type of charging piles; and invoke the fifth type of charging piles for auxiliary charging to the fourth type of charging piles, including: obtaining a lacking charging capacity of any of the fourth type of charging piles, and matching auxiliary charging piles to be scheduled in the fifth type of charging piles, wherein a redundant electricity storage capacity of the auxiliary charging pile to be scheduled is greater than or equal to the lacking charging capacity; constructing a plurality of scheduling lines corresponding to the auxiliary charging piles to be scheduled, and activating a line loss prediction channel to execute electricity loss analysis to generate electricity loss feature values, wherein the line loss prediction channel has a graph neural network topology structure; and according to preset number of times, updating the auxiliary charging piles to be scheduled to obtain updated auxiliary charging piles to be scheduled, determining a plurality of scheduling lines corresponding to the updated auxiliary charging piles to be scheduled and electricity loss feature values, and extracting a charging pile scheduling strategy with a minimum electricity loss feature value for auxiliary charging to the fourth type of charging piles.

The specific examples of the multi-mode charging and discharging control method for charging piles in Embodiment 1 are also suitable for the multi-mode charging and discharging control system for charging piles in this embodiment. Through the detailed description of the above multi-mode charging and discharging control method for charging piles, those skilled in the art can clearly understand the multi-mode charging and discharging control system for charging piles in this embodiment. Therefore, for the sake of simplicity in the specification, details are not described again.

It should be understood that various forms of processes shown above can be used to reorder, add or delete steps as long as the expected results of the technical solutions disclosed in the present disclosure can be achieved, and are not limited herein.

It should be noted that the above descriptions are merely preferred embodiments and used technical principles of the present disclosure. Those skilled in the art should understand that the present disclosure is not limited to the specific embodiments herein. For those skilled in the art, various obvious variations, readjustments and replacements may be made without departing from the protection scope of the present disclosure. Therefore, although the present disclosure is described in more detail with the above embodiments, the present disclosure is not limited to the above embodiments. Without departing from the concept of the present disclosure, more other equivalent embodiments may also be included, and the scope of the present disclosure is defined by the scope of the appended claims.

### Industrial Applicability

The present disclosure is applied to the technical field of charging and discharging control. In the embodiments of the present disclosure, by configuring different charging pile charging and discharging modes and combining a power grid to set different charging and discharging strategies for electricity consumption states at different times, during an electricity consumption peak period, a charging pile performs bidirectional discharging to a user side and a power distribution network direction to achieve the technical effect of reducing the load pressure of the power distribution network; during a stable electricity consumption period, when the initial electricity storage capacity of the charging pile is not able to meet the requirement of the user side, the power grid is activated for auxiliary discharging to meet the requirement of a charging user while reducing the charging pressure of the charging pile; and during an electricity consumption valley period, the charging user of the charging pile is charged through the power grid, and the charging pile that needs to be charged is also charged through the power grid to ensure that the charging pile is fully charged, thereby avoiding insufficient stored electricity when switching to the peak mode subsequently, and achieving the technical effect of charging and discharging balance adjustment in different modes. Therefore, adaptive adjustment of charging and discharging control is achieved on the basis of a power grid load scenario, and the technical effect of improving the scenario adaptability is achieved.

## Claims

1. A multi-mode charging and discharging control method for charging piles, comprising:
configuring charging pile charging and discharging modes, wherein the charging pile charging and discharging modes comprise a peak mode, a flat mode and a valley mode;
when a preset update period is met, performing a statistics operation on electricity consumption information of a power grid in a preset region in a preset period to obtain a peak value period, a flat value period and a valley value period;
when the power grid is in the peak value period, starting the peak mode, receiving a charging pile discharging requirement in the preset region, executing charging pile bidirectional discharging optimization, and generating a charging pile bidirectional discharging strategy to perform charging pile discharging control;
when the power grid is in the flat value period, starting the flat mode, receiving a charging pile discharging requirement in the preset region, executing charging pile linkage discharging optimization, and generating a linkage discharging strategy to perform charging pile discharging control; and
when the power grid is in the valley value period, starting the valley mode, receiving a charging pile discharging requirement in the preset region, executing charging pile charging optimization, and generating a charging pile charging strategy to perform charging pile charging control.

2. The method as claimed in claim 1, wherein the when a preset update period is met, performing a statistics operation on electricity consumption information of a power grid in a preset region in a preset period to obtain a peak value period, a flat value period and a valley value period comprises:
constructing an electricity consumption fluctuation time sequence curve, wherein the electricity consumption information of the power grid in the preset region comprises an electricity consumption time point table in the preset region;
configuring a peak value electricity consumption range, a flat value electricity consumption range and a valley value electricity consumption range; and
performing period segmentation on the electricity consumption fluctuation time sequence curve according to the peak value electricity consumption range, the flat value electricity consumption range and the valley value electricity consumption range to generate the peak value period, the flat value period and the valley value period.

3. The method as claimed in claim 2, wherein the constructing an electricity consumption fluctuation time sequence curve, wherein the electricity consumption information of the power grid in the preset region comprises an electricity consumption time point table in the preset region:
extracting a plurality of recorded electricity consumptions at a first time point in the electricity consumption time point table in the preset region;
sorting the plurality of recorded electricity consumptions from small to large to generate a recorded electricity consumption sorting result;
extracting a first recorded electricity consumption with a quarter number from the recorded electricity consumption sorting result, and extracting a second recorded electricity consumption with a three-quarter number from the recorded electricity consumption sorting result;
calculating a deviation between the second recorded electricity consumption and the first recorded electricity consumption to generate an electricity consumption interinterquartile range;
constructing a centralized box line diagram according to the electricity consumption interquartile range, the first recorded electricity consumption and the second recorded electricity consumption, and distributing the plurality of recorded electricity consumptions to obtain a maximum electricity consumption of a centralized box, which is set as an electricity consumption at the first time point; and
determining respective electricity consumptions at multiple unit time points by the above method for determining the electricity consumption at the first time point to construct the electricity consumption fluctuation time sequence curve.

4. The method as claimed in claim 1, wherein the when the power grid is in the peak value period, starting the peak mode, receiving the charging pile discharging requirement in the preset region, executing charging pile bidirectional discharging optimization, and generating a charging pile bidirectional discharging strategy to perform charging pile discharging control comprises:
the charging pile discharging requirement in the preset region comprises a charging pile required discharging capacity and a charging pile initial electricity storage capacity;
obtaining a charging pile redundant electricity storage capacity according to the charging pile required discharging capacity and the charging pile initial electricity storage capacity;
setting at most two-thirds of the charging pile redundant electricity storage capacity as a power distribution network direction discharging capacity; and
executing the charging pile bidirectional discharging optimization according to the power distribution network direction discharging capacity, and generating the charging pile bidirectional discharging strategy to perform charging pile discharging control.

5. The method as claimed in claim 4, wherein the executing the charging pile bidirectional discharging optimization according to the power distribution network direction discharging capacity, and generating the charging pile bidirectional discharging strategy to perform charging pile discharging control comprises:
the charging pile initial electricity storage capacity comprises an initial electricity storage capacity of a charging pile with a first number, an initial electricity storage capacity of a charging pile with a second number, ..., and an initial electricity storage capacity of a charging pile with the Nth number;
extracting charging piles having the initial electricity storage capacity greater than or equal to a preset electricity storage capacity from the charging pile with the first number, the charging pile with the second number, ..., and the charging pile with the Nth number to obtain power distribution network direction discharging charging pile numbers;
equally dividing the power distribution network direction discharging capacity to charging piles with the power distribution network direction discharging charging pile numbers to generate a power distribution network direction discharging strategy;
configuring a user side direction discharging strategy, wherein the user side direction discharging strategy implements real-time discharging of a charging pile energy storage battery based on user requirements; and
according to the power distribution network direction discharging strategy and the user side direction discharging strategy, constructing the charging pile bidirectional discharging strategy to perform charging pile discharging control.

6. The method as claimed in claim 1, wherein when the power grid is in the flat value period, starting the flat mode, receiving a charging pile discharging requirement in the preset region, executing charging pile linkage discharging optimization, and generating a linkage discharging strategy to perform charging pile discharging control comprises:
the charging pile discharging requirement in the preset region comprises a charging pile required discharging capacity and a charging pile initial electricity storage capacity;
extracting a first type of charging piles having the charging pile required discharging capacity greater than the charging pile initial electricity storage capacity;
extracting a second type of charging piles having the charging pile required discharging capacity less than the charging pile initial electricity storage capacity; and
activating a power grid for auxiliary discharging for the first type of charging piles, and executing energy storage battery discharging for the second type of charging piles, as to generate the linkage discharging strategy to perform charging pile discharging control.

7. The method as claimed in claim 1, wherein the when the power grid is in the valley value period, starting the valley mode, receiving a charging pile discharging requirement in the preset region, executing charging pile charging optimization, and generating a charging pile charging strategy to perform charging pile charging control comprises:
configuring a power grid alternating current discharging strategy according to the charging pile discharging requirement in the preset region, wherein the power grid alternating current discharging strategy invokes the power grid based on user requirements for alternating current charging for users through charging piles;
obtaining an initial electricity storage capacity ratio according to a charging pile initial electricity storage capacity in the charging pile discharging requirement in the preset region, wherein the initial electricity storage capacity ratio represents a ratio of a remaining electricity of any charging pile to an electric energy capacity thereof;
extracting a third type of charging piles having the initial electricity storage capacity ratio less than or equal to an electricity storage capacity ratio threshold to configure a power grid charging strategy; and
constructing the charging pile charging strategy according to the power grid alternating current discharging strategy and the power grid charging strategy, as to perform charging pile charging control.

8. The method as claimed in claim 4, further comprising:
when a first charging pile is connected by a charging user, obtaining a model of a battery to be charged and an electricity to be charged;
when an initial electricity storage capacity of the first charging pile is less than the electricity to be charged, adding a fourth type of charging piles;
when the initial electricity storage capacity of the first charging pile is greater than the electricity to be charged, adding a fifth type of charging piles; and
invoking the fifth type of charging piles for auxiliary charging to the fourth type of charging piles, comprising:
obtaining a lacking charging capacity of any of the fourth type of charging piles, and matching auxiliary charging piles to be scheduled in the fifth type of charging piles, wherein a redundant electricity storage capacity of the auxiliary charging pile to be scheduled is greater than or equal to the lacking charging capacity;
constructing a plurality of scheduling lines corresponding to the auxiliary charging piles to be scheduled, and activating a line loss prediction channel to execute electricity loss analysis to generate electricity loss feature values, wherein the line loss prediction channel has a graph neural network topology structure; and
according to preset number of times, updating the auxiliary charging piles to be scheduled to obtain updated auxiliary charging piles to be scheduled, determining a plurality of scheduling lines corresponding to the updated auxiliary charging piles to be scheduled and electricity loss feature values, and extracting a charging pile scheduling strategy with a minimum electricity loss feature value for auxiliary charging to the fourth type of charging piles.

9. A multi-mode charging and discharging control system for charging piles, configured to perform the steps of the method as claimed in any one of claims 1 to 8, the system comprising:
a charging and discharging mode configuring assembly, the charging and discharging mode configuring assembly being configured to configure charging pile charging and discharging modes, wherein the charging pile charging and discharging modes comprise a peak mode, a flat mode and a valley mode;
an electricity consumption information statistics assembly, the electricity consumption information statistics assembly being configured to, when a preset update period is met, perform a statistics operation on electricity consumption information of a power grid in a preset region in a preset period to obtain a peak value period, a flat value period and a valley value period;
a bidirectional discharging optimization assembly, the bidirectional discharging optimization assembly being configured to, when the power grid is in the peak value period, start the peak mode, receive a charging pile discharging requirement in the preset region, execute charging pile bidirectional discharging optimization, and generate a charging pile bidirectional discharging strategy to perform charging pile discharging control;
a linkage discharging optimization assembly, the linkage discharging optimization assembly being configured to, when the power grid is in the flat value period, start the flat mode, receive a charging pile discharging requirement in the preset region, execute charging pile linkage discharging optimization, and generate a linkage discharging strategy to perform charging pile discharging control; and
a charging optimization assembly, the charging optimization assembly being configured to, when the power grid is in the valley value period, start the valley mode, receive a charging pile discharging requirement in the preset region, execute charging pile charging optimization, and generate a charging pile charging strategy to perform charging pile charging control.
